# EUROPÄISCHE PATENTANMELDUNG

(11) **EP 3 881 661 A1**
(43) Veröffentlichungstag der Anmeldung: **22.09.2021**
(21) Anmeldenummer: 20401023.5
(22) Anmeldetag: 20.03.2020
(51) Int. Cl.: A01C 15/04, A01C 21/00

(54) **VERFAHREN ZUM AUSBRINGEN VON GRANULAREM MATERIAL**

(71) Anmelder: Amazonen-Werke H. Dreyer SE & Co. KG, 49205 Hasbergen (DE)
(72) Erfinder: Austermann, Stefan, 48291 Telgte (DE); Dreyer, Justus, 49078 Osnabrück (DE); Ehlen, Volker, 49205 Hasbergen (DE); Johannaber, Stefan Jan, 49536 Lienen (DE); Kiefer, Stefan, 49074 Osnabrück (DE); Holtkötter, Christian, 33775 Versmold (DE); Klemann, Timo, 49191 Belm (DE); Hilbert, Florenz, 48282 Emsdetten (DE)

(57) **Zusammenfassung**

Die Erfindung betrifft ein Verfahren zum Ausbringen von granularem Material mittels einer landwirtschaftlichen Verteileinrichtung, insbesondere einem Pneumatikstreuer, mit den Schritten: Erfassen von Pflanzenreihen auf einer landwirtschaftlichen Nutzfläche (N) und Ausbringen von granularem Material auf die landwirtschaftliche Nutzfläche mittels mehrerer Ausbringelemente (12a-12k, 14a-14j) , welche entlang eines Verteilgestänges (10) der landwirtschaftlichen Verteileinrichtung quer zur Fahrtrichtung angeordnet sind, wobei sich die Ausbringung von granularem Material entlang von Reihenbereichen (22a-22k) , welche in Fahrtrichtung verlaufende Pflanzenreihen (20a-20k) aufweisen, von der Ausbringung von granularem Material entlang von Zwischenbereichen (24a-24j) , welche sich zwischen zwei in Fahrtrichtung verlaufenden Pflanzenreihen (20a-20k) befinden, unterscheidet.

## Beschreibung

Die Erfindung betrifft ein Verfahren zum Ausbringen von granularen Material nach dem Oberbegriff des Patentanspruchs 1 und eine landwirtschaftliche Verteileinrichtung nach dem Oberbegriff des Patentanspruchs 12.

Unterschiedliche landwirtschaftliche Nutzpflanzen werden entlang von parallel zueinander verlaufenden Saatreihen ausgesät. Somit kommt es während der Auswuchsphase der landwirtschaftlichen Nutzpflanzen zu entsprechenden Pflanzenreihen auf der landwirtschaftlichen Nutzfläche.

Zur Bekämpfung von Schadbewuchs, welcher sich zwischen den landwirtschaftlichen Nutzpflanzen während der Aufwuchsphase ausbildet, sind bereits Erfassungssysteme bekannt, welche einzelne Wildpflanzen auf einer landwirtschaftlichen Nutzfläche erfassen können. Dies erlaubt das lokale Ausbringen von Pflanzenschutzmitteln auf die erfassten Wildpflanzen zwischen den Pflanzenreihen. Bei der Verwendung gattungsgemäßer Verteileinrichtungen wird in den Bereichen zwischen den Pflanzenreihen die Ausbringung von Bodennährstoffen und/oder Schädlingsbekämpfungsmitteln angestrebt.

Die Erfassung einzelner Wildpflanzen auf einer landwirtschaftlichen Nutzfläche ist jedoch vergleichsweise aufwendig, sodass landwirtschaftliche Verteileinrichtungen mit kostenintensiven Sensor- oder Kamerasystemen auszustatten sind. In einer Vielzahl von Anwendungsbereichen scheidet die Verwendung entsprechender Erfassungssysteme zur gezielten lokalen Ausbringung von Pflanzenschutzmitteln also aus.

Ferner sind im Stand der Technik Systeme bekannt, welche die Erfassung von Pflanzenreihen mit einem vergleichsweise geringen Aufwand ermöglichen. Entsprechende Systeme werden zur reihenbezogenen Ausbringung von Spritzflüssigkeit bei Feldspritzen eingesetzt, erlauben jedoch bisher nicht die Bekämpfung von Schädlingen zwischen den Pflanzenreihen. Als Pneumatikstreuer ausgeführte Verteileinrichtungen mit derartigen Systemen sind bisher nicht bekannt.

Die der Erfindung zugrundeliegende Aufgabe besteht somit darin, die Schädlingsbekämpfung und/oder Bodennährstoffversorgung auf Pflanzenreihen aufweisenden landwirtschaftlichen Nutzflächen zu vereinfachen.

Die Aufgabe wird gelöst durch ein Verfahren der eingangs genannten Art, wobei sich im Rahmen des erfindungsgemäßen Verfahrens die Ausbringung von granularen Material entlang von Reihenbereichen, welche in Fahrtrichtung verlaufende Pflanzenreihen aufweisen, von der Ausbringung von granularen Material entlang von Zwischenbereichen, welche sich zwischen zwei in Fahrtrichtung verlaufenden Pflanzenreihen befinden, unterscheidet.

Die Erfindung macht sich die Erkenntnis zunutze, dass durch unterschiedliche Ausbringungen entlang von Reihenbereichen und entlang von Zwischenbereichen der landwirtschaftlichen Nutzfläche keine aufwendige Einzelerfassung notwendig ist. Die Reihenerfassung ist wesentlich kostengünstiger und einfacher umsetzbar. Trotzdem erlaubt das erfindungsgemäße Verfahren ein zielgerichtetes Ausbringen entsprechender Schädlingsbekämpfungsmittel und/oder Bodennährstoffe, ohne dass die Ausbringung entsprechender Wirkstoffe auf den Nutzpflanzenbestand zu erfolgen hat. Somit werden die Nutzpflanzen auf der landwirtschaftlichen Nutzfläche geschont, wodurch das Wachstumspotential gesteigert wird. Im Vergleich zu einer einheitlichen Ausbringung von Schädlingsbekämpfungsmitteln über die gesamte landwirtschaftliche Nutzfläche kommt es außerdem zu einer erheblichen Einsparung von Schädlingsbekämpfungsmitteln und außerdem zu einer deutlichen Erhöhung der Wirksamkeit des Ausbringvorgangs.

Das auf die Reihenbereiche und/oder die Zwischenbereiche ausgebrachte granulare Material beinhaltet vorzugsweise einen oder mehrere Wirkstoffe. Zumindest ein Wirkstoff kann ein Pflanzennährstoff sein, welcher die Nutzpflanzen auf der landwirtschaftlichen Nutzfläche ernährt. Zumindest ein Wirkstoff kann auch ein Wachstumsregulator sein. Alternativ oder zusätzlich kann zumindest ein Wirkstoff auch ein Schädlingsbekämpfungsmittel sein.

In einer bevorzugten Ausführungsform des erfindungsgemäßen Verfahrens unterscheidet sich die Ausbringung von granularen Material entlang der Reihenbereiche von der Ausbringung von granularen Material entlang der Zwischenbereiche hinsichtlich der Ausbringmenge an granularen Material. Somit unterscheidet sich auch die ausgebrachte Wirkstoffmenge entlang der Reihenbereiche und entlang der Zwischenbereiche. In einer Ausführungsform des erfindungsgemäßen Verfahrens kann die Ausbringmenge in den Reihenbereichen oder den Zwischenbereichen auch Null sein. In einer alternativen Ausführungsform des erfindungsgemäßen Verfahrens ist weder die Ausbringmenge in den Reihenbereichen noch die Ausbringmenge in den Zwischenbereichen gleich Null.

In einer anderen Ausführungsform des erfindungsgemäßen Verfahrens unterscheidet sich die Ausbringung von granularen Material entlang der Reihenbereiche von der Ausbringung von granularen Material entlang der Zwischenbereiche hinsichtlich der Ausbringmethode. In einer Ausbringmethode wird das granulare Material mittels einer Düsenausbringung auf die landwirtschaftliche Nutzfläche ausgebracht. In diesem Fall sind die Ausbringelemente vorzugsweise als Verteildüsen ausgebildet. Bei dieser Ausbringmethode kommt es zu einer fächerartigen Verteilung des granularen Materials, wodurch zumindest bereichsweise eine gleichmäßige Materialausbringung umsetzbar ist. In einer alternativen Ausbringmethode wird das granulare Material mittels einer Schlauchausbringung auf die landwirtschaftliche Nutzfläche ausgebracht. Bei einer entsprechenden Schlauchausbringung können Ausbringschläuche über die landwirtschaftliche Nutzfläche gezogen werden, sodass die Ausbringung des granularen Materials auf der landwirtschaftlichen Nutzfläche entlang von zueinander beabstandeten und im Wesentlichen parallel zueinander verlaufenden Reihen erfolgt. Die Ausbringmethoden können sich auch hinsichtlich der Beabstandung der Ausbringelemente zur landwirtschaftlichen Nutzfläche voneinander unterscheiden. Beispielsweise erfolgt die Ausbringung von granularen Material entlang der Reihenbereiche mittels Ausbringelementen, welche einen ersten Abstand von der landwirtschaftlichen Nutzfläche aufweisen und die Ausbringung des granularen Materials entlang der Zwischenbereiche erfolgt mittels Ausbringelementen, welche einen zweiten Abstand zu der landwirtschaftlichen Nutzfläche aufweisen, wobei sich der erste Abstand von dem zweiten Abstand unterscheidet.

Es ist außerdem ein erfindungsgemäßes Verfahren bevorzugt, bei welchem das granulare Material entlang der Reihenbereiche mittels eines ersten Typs von Ausbringelementen und das granulare Material entlang der Zwischenbereiche mittels eines zweiten Typs von Ausbringelementen ausgebracht wird. Die Ausbringelemente des ersten Typs können Düsen, insbesondere Fächerdüsen, sein, welche vorzugsweise im Bereich des Verteilgestänges angeordnet sind. Die Ausbringelemente des zweiten Typs können Prallteller sein, welche im Nahbereich des Bodens angeordnet und über eine Leitung mit dem Verteilgestänge verbunden sind. Die Leitung kann ein Rohr oder ein Schlauch sein. Die im Nahbereich des Bodens angeordneten Prallteller bewegen sich während der Ausbringung des granularen Materials auf die landwirtschaftliche Nutzfläche vorzugsweise unterhalb eines Blätterdachs der Nutzpflanzen. Die Ausbringelemente des zweiten Typs können auch Dropleg-Schläuche sein. Ferner können die Ausbringelemente des ersten Typs oder des zweiten Typs auch Schleppschläuche sein.

In einer Weiterbildung des erfindungsgemäßen Verfahrens wird entlang der Reihenbereiche ein erstes granulares Material und entlang der Zwischenbereiche ein zweites granulares Material ausgebracht. Das erste granulare Material unterscheidet sich dabei von dem zweiten granularen Material. Insbesondere unterscheiden sich das erste granulare Material und das zweite granulare Material hinsichtlich ihrer Bestandteile und/oder hinsichtlich ihrer Zusammensetzung. Insbesondere weisen das erste granulare Material und das zweite granularen Material unterschiedliche Wirkstoffe und/oder unterschiedliche Mengen an Wirkstoffen auf.

Darüber hinaus ist ein erfindungsgemäßes Verfahren bevorzugt, bei welchem das erste granulare Material Pflanzennährstoffe und/oder Wachstumsregulatoren umfasst. Alternativ oder zusätzlich umfasst das zweite granulare Material zumindest ein Schädlingsbekämpfungsmittel. Das erste granulare Material und das zweite granularen Material können sich auch in ihren Anteilen an Pflanzennährstoffen, Wachstumsregulatoren und/oder Schädlingsbekämpfungsmitteln unterscheiden. In den Reihenbereichen und in den Zwischenbereichen können einzelne Wirkstoffe auch vollständig weggelassen werden. Schädlingsbekämpfungsmittelkönnen das Nutzpflanzenwachstum hemmen und sind somit in den Reihenbereichen zu vermeiden oder zumindest geringer zu dosieren. In den Zwischenbereichen herrscht regelmäßig ein höherer Schädlingsdruck, sodass hier eine stärkere Bekämpfung und somit eine gesteigerte Schädlingsbekämpfungsmitteln-Anwendung notwendig ist. Durch eine geringe Menge an Schädlingsbekämpfungsmitteln in den Reihenbereichen werden die Nutzpflanzen geschont, sodass es zu einer Steigerung des Wachstumspotentials kommt.

In einer besonders bevorzugten Ausführungsform des erfindungsgemäßen Verfahrens wird die Ausbringung von granularen Material entlang der Reihenbereiche während des Ausbringvorgangs verändert. Alternativ oder zusätzlich wird die Ausbringung von granularen Material entlang der Zwischenbereiche während des Ausbringvorgangs verändert. Die Ausbringung von granularen Material entlang der Zwischenbereiche kann beispielsweise erfolgen, wenn lokal stark ausgeprägter Schädlingsbefall auf der landwirtschaftlichen Nutzfläche innerhalb eines Zwischenbereichs erfasst wird. In diesem Fall ist eine zusätzliche Erfassungseinrichtung notwendig, welche die Erfassung von Schädlingen auf der landwirtschaftlichen Nutzfläche ermöglicht. Die Ausbringung von granularen Material entlang der Reihenbereiche kann beispielsweise verändert werden, wenn ein lokal beeinträchtigter Pflanzenzustand entlang der Reihenbereiche erfasst wird. Dies kann beispielsweise über ein Erfassen der Pflanzenhöhe bzw. Wachstumshöhe der Nutzpflanzen erfolgen. Alternativ oder zusätzlich kann eine Farbauswertung entlang der Reihenbereiche erfolgen, sodass aufgrund des Farbzustands der Nutzpflanzen eine lokale Beeinträchtigung des Pflanzenbestands erfasst werden kann.

Alternativ kann die Ausbringung von granularen Material entlang der Reihenbereiche und/oder die Ausbringung von granularen Material entlang der Zwischenbereiche auch vor dem Ausbringvorgang festgelegt werden, sodass während des Ausbringvorgangs keine Veränderung der Materialausbringung entlang der Reihenbereiche und/oder entlang der Zwischenbereiche erfolgt.

Darüber hinaus ist ein erfindungsgemäßes Verfahren bevorzugt, bei welchem die Position und/oder die Neigung von einzelnen oder sämtlichen Ausbringelementen in Bezug auf das Verteilgestänge während des Ausbringens dew granularen Materials verändert wird. Beispielsweise können einzelne oder sämtliche Ausbringelemente der landwirtschaftlichen Verteileinrichtung aktiv und/oder unabhängig voneinander angesteuert werden. Das Positionieren von Ausbringelementen erfolgt vorzugsweise durch eine Bewegung der Ausbringelemente quer zur Fahrtrichtung. Das Bewegen der Ausbringelemente erfolgt vorzugsweise mittels elektrischer, pneumatischer oder hydraulischer Aktoren. Eine oder mehrere Ausbringelemente können oberhalb von Pflanzenreihen positioniert und/oder auf Pflanzenreihen ausgerichtet werden. Eine oder mehrere Ausbringelemente können oberhalb von Zwischenbereichen positioniert und/oder auf Zwischenbereiche ausgerichtet werden.

Das erfindungsgemäße Verfahren wird ferner dadurch vorteilhaft weitergebildet, dass das Erfassen von Pflanzenreihen auf der landwirtschaftlichen Nutzfläche mittels eines oder mehrerer Sensoren und/oder mittels einer oder mehrerer Kameras der landwirtschaftlichen Verteileinrichtung erfolgt. Insbesondere ist der eine oder sind die mehreren Sensoren und/oder ist die eine oder sind die mehreren Kameras an dem Verteilgestänge der landwirtschaftlichen Verteileinrichtung angeordnet und/oder befestigt. Vorzugsweise ist der eine oder sind die mehreren Sensoren und/oder ist die eine oder sind die mehreren Kameras mit einer Steuerungseinrichtung verbunden, welche die Sensorsignale oder die Kamerasignale auswertet. Vorzugsweise erfolgt das Ausbringen des granularen Materials auf die landwirtschaftliche Nutzfläche mittels der Ausbringelemente in Abhängigkeit der durch die Steuerungseinrichtung ausgewerteten Sensorsignale oder Kamerasignale.

Die der Erfindung zugrundeliegende Aufgabe wird ferner durch eine landwirtschaftliche Verteileinrichtung der eingangs genannten Art gelöst, wobei die erfindungsgemäße Verteileinrichtung dazu eingerichtet ist, entlang von Reihenbereichen, welche in Fahrtrichtung verlaufenden Pflanzenreihen aufweisen, und entlang von Zwischenbereichen, welche sich zwischen zwei in Fahrtrichtung verlaufenden Pflanzenreihen befinden, sich voneinander unterscheidende granulare Materialausbringungen umzusetzen.

In einer bevorzugten Ausführungsform der erfindungsgemäßen landwirtschaftlichen Verteileinrichtung weist diese eine Steuerungseinrichtung auf, welche dazu eingerichtet ist, die landwirtschaftliche Verteileinrichtung dazu zu veranlassen, entlang der Reihenbereiche und entlang der Zwischenbereiche unterschiedliche Ausbringmengen an granularen Material und/oder unterschiedliche granulare Materialien auszubringen. Die Steuerungseinrichtung ist vorzugsweise signalleitend mit der Erfassungseinrichtung verbunden. Die Erfassungseinrichtung kann eine oder mehrere Sensoren und/oder eine oder mehrere Kameras umfassen.

In einer anderen Ausführungsform der erfindungsgemäßen landwirtschaftlichen Verteileinrichtung weist diese Ausbringelemente eines ersten Typs und Ausbringelemente eines zweiten Typs auf, wobei die Ausbringelemente derart angeordnet und/oder ausgerichtet sind, dass granulares Material entlang der Reihenbereiche mittels der Ausbringelemente des ersten Typs und granulares Material entlang der Zwischenbereiche mittels der Ausbringelemente des zweiten Typs ausbringbar ist. Hierdurch kann das granulare Material entlang der Reihenbereiche und entlang der Zwischenbereiche mit unterschiedlichen Ausbringmethoden ausgebracht werden.

In einer weiteren Ausführungsform der erfindungsgemäßen landwirtschaftlichen Verteileinrichtung ist diese dazu eingerichtet, dass Verfahren zum Ausbringen von granularen Material nach einer der vorstehend beschriebenen Ausführungsformen auszuführen. Hinsichtlich der Vorteile und Modifikationen einer derartigen landwirtschaftlichen Verteileinrichtung wird auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: einen Abschnitt eines Verteilgestänges einer erfindungsgemäßen landwirtschaftlichen Verteileinrichtung in einer schematischen Darstellung; und
- Fig. 2: Teile einer erfindungsgemäßen landwirtschaftlichen Verteileinrichtung in einer schematischen Darstellung.

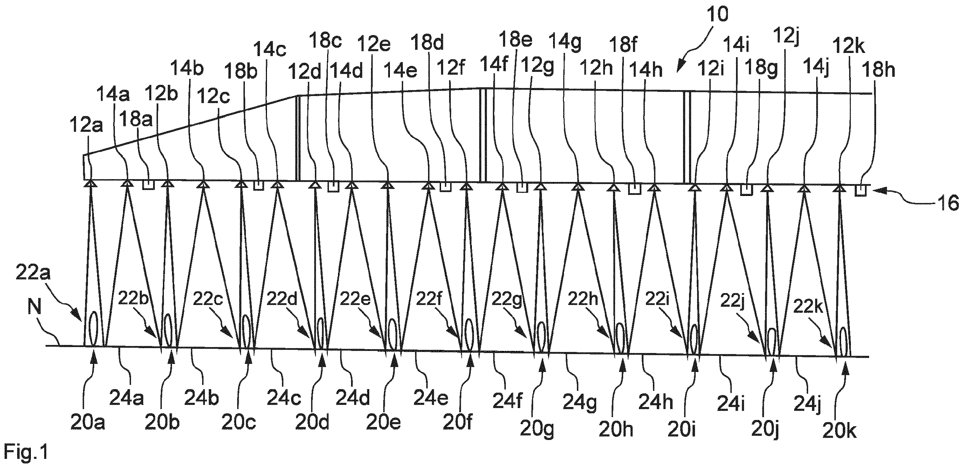

Die Fig. 1 zeigt ein Verteilgestänge 10 einer als Pneumatikstreuer ausgebildeten landwirtschaftlichen Verteileinrichtung. Der dargestellte Abschnitt des Verteilgestänges 10 ist ein seitlicher Ausleger, welche sich quer zur Fahrtrichtung der landwirtschaftlichen Verteileinrichtung erstreckt. Das Verteilgestänge 10 weist einen weiteren sich in die entgegengesetzte Richtung erstreckenden Ausleger auf.

Das Verteilgestänge 10 umfasst mehrere Gestängesegmente, welche zueinander klappbar ausgebildet sind. An dem Verteilgestänge 10 sind mehrere Kameras 18a-18h einer Erfassungseinrichtung 16 angeordnet. Die Erfassungseinrichtung 16 dient zum Erfassung von Pflanzenreihen 20a-20k auf der landwirtschaftlichen Nutzfläche N. Ferner sind an dem Verteilgestänge 10 mehrere als Verteildüsen ausgebildete Ausbringelemente 12a-12k, 14a-14j angeordnet, mittels welchen granulares Material auf die landwirtschaftliche Nutzfläche N ausbringbar ist. Mittels der Ausbringelemente 12a-12k ist granulares Material entlang von Reihenbereichen 22a-22k ausbringbar, wobei die Reihenbereiche 22a-22k die in Fahrtrichtung verlaufenden Pflanzenreihen 20a-20k umfassen. Mittels der Ausbringelemente 14a-14j ist granulares Material entlang von Zwischenbereichen 24a-24j ausbringbar, wobei sich die Zwischenbereiche 24a-24j jeweils zwischen zwei in Fahrtrichtung verlaufenden Pflanzenreihen 20a-20k befinden.

Da die Ausbringelemente 12a-12k und die Ausbringelemente 14a-14j sich voneinander unterscheiden, wird das granulare Material in den Reihenbereichen 22a-22k in anderer Weise ausgebracht als in den Zwischenbereichen 24a-24j. Damit dies umgesetzt wird, umfasst die landwirtschaftliche Verteileinrichtung eine Steuerungseinrichtung, welche die landwirtschaftliche Verteileinrichtung dazu veranlasst, entlang der Reihenbereiche 22a-22k und entlang der Zwischenbereiche 24a-24j unterschiedliche Ausbringmengen an granularen Material und unterschiedliche granularen Materialien auszubringen. Somit wird in den Reihenbereichen 22a-22k eine erste Menge von granularen Material ausgebracht, wobei in den Zwischenbereichen 24a-24j eine zweite Menge von granularen Material ausgebracht wird. Ferner wird in den Reihenbereichen 22a-22k ein erstes granulares Material ausgebracht, wobei in den Zwischenbereichen 24a-24j ein zweites granulares Material ausgebracht wird. Das erste granularen Material und das zweite granulare Material unterscheiden sich hinsichtlich ihrer Zusammensetzung und hinsichtlich ihrer Wirkstoffe. Das erste granulare Material, welches entlang der Reihenbereiche 22a-22k ausgebracht wird, umfasst Pflanzennährsstoffe, damit die Nutzpflanzen der Pflanzenreihen 20a-20k für das Wachstum ausreichend versorgt werden. Die Pflanzennährsstoffekönnen beispielsweise ein Mischdünger sein. Das zweite granulare Material, welches entlang der Zwischenbereiche 24a-24j ausgebracht wird, kann beispielsweise ein Schädlingsbekämpfungsmittel umfassen, sodass eine effektive Schädlingsbekämpfung in den Zwischenbereichen 24a-24j umgesetzt wird.

Da sich die Ausbringung von granularen Material entlang der Reihenbereiche 22a-22k von der Ausbringung von Granularen Material entlang der Zwischenbereiche 24a-24j hinsichtlich der Ausbringmenge an granularen Material unterscheidet, kommt es auch zur Ausbringung unterschiedlicher Wirkstoffmengen entlang der Reihenbereiche 22a-22k und entlang der Zwischenbereiche 24a-24j.

Die Ausbringung des ersten granularen Materials entlang der Reihenbereiche 22a-22k und die Ausbringung des zweiten granularen Materials entlang der Zwischenbereiche 24a-24j kann während des Ausbringvorgangs verändert werden. Beispielsweise kann die Erfassungseinrichtung 16 nicht nur zur Erfassung von Pflanzenreihen 20a-20k, sondern ebenso zur Erfassung von lokalem Schädlingsbefall geeignet sein. In diesem Fall kann die Materialausbringung gezielt an den erfassten Schädlingsbefall angepasst werden. Beispielsweise kann lokal eine erhöhte Menge an Schädlingsbekämpfungsmittel oder eine erhöhte Menge an Insektiziden abgegeben werden.

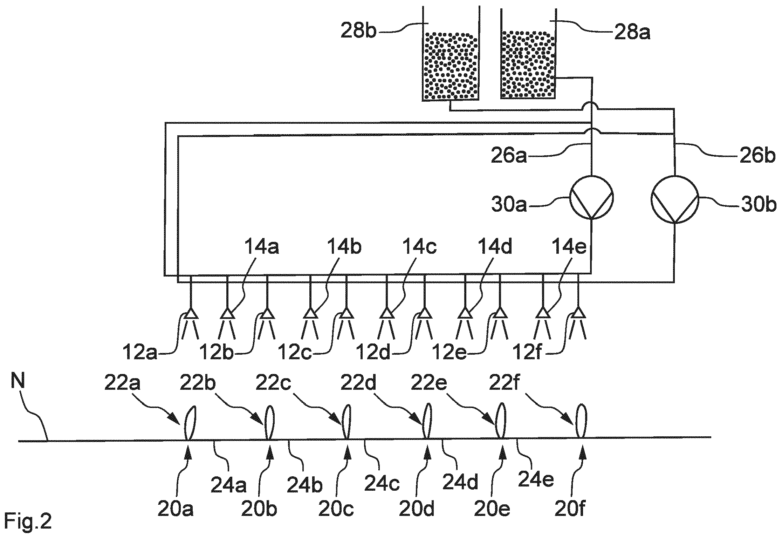

Die Fig. 2 zeigt zwei Materialkreisläufe 26a, 26b einer landwirtschaftlichen Verteileinrichtung. Über den ersten Materialkreislauf 26a wird den als Verteildüsen ausgebildeten Ausbringelementen 12a-12f ein erstes granulares Material zur Ausbringung bereitgestellt, welches in dem Vorratsbehälter 28a bevorratet ist. Innerhalb des ersten Materialkreislaufs 26a ist eine Pumpe 30a angeordnet, mittels welcher eine Förderung des ersten granularen Materials innerhalb des ersten Materialkreislaufs 26a erzeugt wird. Über den zweiten Materialkreislauf 26b wird den als Verteildüsen ausgebildeten Ausbringelementen 14a-14e ein zweites granulares Material zur Ausbringung bereitgestellt, welches in dem Vorratsbehälter 28b bevorratet ist. Innerhalb des zweiten Materialkreislaufs 26b ist eine Pumpe 30b angeordnet, mittels welcher eine Zirkulation des zweiten granularen Materials innerhalb des zweiten Materialkreislaufs 26b erzeugt wird.

Mittels der Ausbringelemente 12a-12f wird das erste granulare Material entlang von Reihenbereichen 22a-22f ausgebracht, wobei die Reihenbereiche 22a-22f die in Fahrtrichtung verlaufenden Pflanzenreihen 20a-20f umfassen. Über die Ausbringelemente 14a-14e wird das zweite granularen Material entlang von Zwischenbereichen 24a-24e ausgebracht, wobei die Zwischenbereiche 24a-24e jeweils zwischen benachbarten Pflanzenreihen 20a-20f parallel zur Fahrtrichtung verlaufen.

Alternativ zu der Bevorratung des auszubringenden granularen Materials in Vorratsbehältern 28a, 28b können das erste granulare Material und/oder das zweite granulare Material auch über eine Wirkstoff-Direkteinspeisung erzeugt werden. Ferner können alternativ zu den dargestellten Fächerdüsen auch Dropleg-Schläuche eingesetzt werden, deren Düsenöffnung im Nahbereich des Bodens angeordnet ist, sodass die Düsenöffnung sich unterhalb des Blätterdachs der Nutzpflanzen während der Ausbringung der granularen Materialien befindet. Ferner können die Ausbringelemente 12a-12f oder die Ausbringelemente 14a-14e auch als Schleppschläuche ausgebildet sein.

Die Ausbringelemente 12a-12f und/oder die Ausbringelemente 14a-14e können dabei derart an dem Verteilgestänge 10 der landwirtschaftlichen Verteileinrichtung befestigt sein, dass die Position und die Neigung der Ausbringelemente 12a-12f, 14a-14e in Bezug auf das Verteilgestänge 10 während des Ausbringens der granularen Materialien veränderbar ist. Hierfür sind die Ausbringelemente 12a-12f, 14a-14e unabhängig voneinander aktiv ansteuerbar, sodass eine Bewegung der Ausbringelemente 12a-12f, 14a-14e quer zur Fahrtrichtung realisierbar ist. Das Bewegen der Ausbringelemente 12a-12f, 14a-14e erfolgt dabei über elektrische, pneumatische oder hydraulische Aktoren.

### Bezugszeichen

- 10: Verteilgestänge
- 12a-12k: Ausbringelemente
- 14a-14j: Ausbringelemente
- 16: Erfassungseinrichtung
- 18a-18h: Kameras
- 20a-20k: Pflanzenreihen
- 22a-22k: Reihenbereiche
- 24a-24j: Zwischenbereiche
- 26a, 26b: Materialkreisläufe
- 28a, 28b: Vorratsbehälter
- 30a, 30b: Pumpen

- N: landwirtschaftliche Nutzfläche

## Patentansprüche

1. Verfahren zum Ausbringen von Granularen Materialgranularen Material mittels einer landwirtschaftlichen Verteileinrichtung, insbesondere einem Pneumatikstreuer, mit den Schritten:
- Erfassen von Pflanzenreihen auf einer landwirtschaftlichen Nutzfläche (N); und
- Ausbringen von granularen Material auf die landwirtschaftliche Nutzfläche (N) mittels mehrerer Ausbringelemente (12a-12k, 14a-14j), welche entlang eines Verteilgestänges (10) der landwirtschaftlichen Verteileinrichtung quer zur Fahrtrichtung angeordnet sind;
**dadurch gekennzeichnet, dass** sich die Ausbringung von granularen Material entlang von Reihenbereichen (22a-22k), welche in Fahrtrichtung verlaufende Pflanzenreihen (20a-20k) aufweisen, von der Ausbringung von granularen Material entlang von Zwischenbereichen (24a-24j), welche sich zwischen zwei in Fahrtrichtung verlaufenden Pflanzenreihen (20a-20k) befinden, unterschiedet.

2. Verfahren nach Anspruch 1,
**dadurch gekennzeichnet, dass** sich die Ausbringung von granularen Material entlang der Reihenbereiche (22a-22k) von der Ausbringung von granularen Material entlang der Zwischenbereiche (24a-24j) hinsichtlich der Ausbringmenge an granularen Material unterscheidet.

3. Verfahren nach Anspruch 1 oder 2,
**dadurch gekennzeichnet, dass** sich die Ausbringung von granularen Material entlang der Reihenbereiche (22a-22k) von der Ausbringung von granularen Material entlang der Zwischenbereiche (24a-24j) hinsichtlich der Ausbringmethode unterscheidet.

4. Verfahren nach Anspruch 3,
**dadurch gekennzeichnet, dass** das granulare Material entlang der Reihenbereiche (22a-22k) mittels eines ersten Typs von Ausbringelementen (12a-12k) und das granularen Material entlang der Zwischenbereiche (24a-24j) mittels eines zweiten Typs von Ausbringelementen (14a-14j) ausgebracht wird.

5. Verfahren nach einem der vorstehenden Ansprüche,
**dadurch gekennzeichnet, dass** entlang der Reihenbereiche (22a-22k) ein erstes granulares Material und entlang der Zwischenbereiche (24a-24j) ein zweites granulares Material ausgebracht wird.

6. Verfahren nach Anspruch 5,
**dadurch gekennzeichnet, dass** das erste granulare Material Pflanzennährstoffe und/oder Wachstumsregulatoren umfasst und/oder das zweite granulare Material zumindest ein Schädlingsbekämpfungsmittel umfasst.

7. Verfahren nach einem der vorstehenden Ansprüche,
**dadurch gekennzeichnet**, die Ausbringung von granularen Material entlang der Reihenbereiche (22a-22k) und/oder die Ausbringung von granularen Material entlang der Zwischenbereiche (24a-24j) während des Ausbringvorgangs verändert wird.

8. Verfahren nach einem der vorstehenden Ansprüche,
**dadurch gekennzeichnet, dass** die Position und/oder die Neigung von einzelnen oder sämtlichen Ausbringelementen (12a-12k, 14a-14j) in Bezug auf das Verteilgestänge (10) während des Ausbringens des granularen Materials verändert wird.

9. Verfahren nach einem der vorstehenden Ansprüche,
**dadurch gekennzeichnet, dass** das Erfassen von Pflanzenreihen (20a-20k) auf der landwirtschaftlichen Nutzfläche (N) mittels eines oder mehrerer Sensoren und/oder mittels einer oder mehrerer Kameras (18a-18h) der landwirtschaftlichen Verteileinrichtung erfolgt.

10. Landwirtschaftliche Verteileinrichtung, insbesondere Pneumatikstreuer, mit
- einer Erfassungseinrichtung (16), welche dazu eingerichtet ist, Pflanzenreihen (20a-20k) auf einer landwirtschaftlichen Nutzfläche (N) zu erfassen; und
- mehreren Ausbringelementen (12a-12k, 14a-14j), welche entlang eines Verteilgestänges (10) quer zur Fahrtrichtung angeordnet und dazu eingerichtet sind, granulares Material auf die landwirtschaftliche Nutzfläche (N) auszubringen;
**dadurch gekennzeichnet, dass** die Verteileinrichtung dazu eingerichtet ist, entlang von Reihenbereichen (22a-22k), welche in Fahrtrichtung verlaufende Pflanzenreihen (20a-20k) aufweisen, und entlang von Zwischenbereichen (24a-24j), welche sich zwischen zwei in Fahrtrichtung verlaufenden Pflanzenreihen (20a-20k) befinden, sich voneinander unterscheidende granulare Materialausbringungen umzusetzen.

11. Landwirtschaftliche Verteileinrichtung nach Anspruch 10, **gekennzeichnet durch** eine Steuerungseinrichtung, welche dazu eingerichtet ist, die landwirtschaftliche Verteileinrichtung dazu zu veranlassen, entlang der Reihenbereiche (22a-22k) und entlang der Zwischenbereiche (24a-24j) unterschiedliche Ausbringmengen an granularen Material und/oder unterschiedliche granularen Materialien auszubringen.

12. Landwirtschaftliche Verteileinrichtung nach Anspruch 10 oder 11, **gekennzeichnet durch** Ausbringelemente (12a-12k) eines ersten Typs und Ausbringelemente (14a-14j) eines zweiten Typs, wobei die Ausbringelemente (12a-12k, 14a-14j) derart angeordnet und/oder ausgerichtet sind, dass granulares Material entlang der Reihenbereiche (22a-22k) mittels der Ausbringelemente (12a-12k) des erstens Typs und das granulare Material entlang der Zwischenbereiche (24a-24j) mittels der Ausbringelemente (14a-14j) des zweiten Typs ausbringbar sind.

13. Landwirtschaftliche Verteileinrichtung nach einem der Ansprüche 10 bis 12, **dadurch gekennzeichnet, dass** die landwirtschaftliche Verteileinrichtung dazu eingerichtet ist, das Verfahren zum Ausbringen von granularen Material nach einem der Ansprüche 1 bis 9 auszuführen.
